# EUROPEAN PATENT SPECIFICATION

(11) **EP 1 389 855 B1**
(45) Date of publication and mention of the grant of the patent: **23.09.2009**
(21) Application number: 03018488.1
(22) Date of filing: 14.08.2003
(51) Int. Cl.: H04W 72/12, H04W 88/06

(54) **Method and apparatus for mitigating radio frequency interference between transceiver systems**
Verfahren und Vorrichtung zur Verminderung der Funkfrequenzinterferenz zwischen Sende-/Empfänger-Systemen
Procédé et appareil d'atténuation d'interférence de fréquences radio entre des systèmes émetteur-récepteur

(30) Priority: 14.08.2002 US 218401; 26.12.2002 US 329958
(43) Date of publication of application: 18.02.2004
(73) Proprietor: Intel Corporation, Santa Clara, CA 95052 (US)
(72) Inventor: Kardach, James P., Saratoga, California 95070 (US); Chinn, Gordon, San Jose, California 95120 (US); Durrant, Randy, Colorado Springs, Colorado 80920 (US); Rajamani, Krishnan, San Diego, California 92130 (US); Monroe, Robert L., Colorado Springs, Colorado 80920 (US)
(74) Representative: Jacoby, Georg

(56) References cited:
- EP-A- 1 052 867
- EP-A- 1 220 499
- WO-A-00/64107
- WO-A-96/38925
- US-A1- 2001 051 530
- US-A1- 2002 062 385
- US-B1- 6 326 926

## Description

### CROSS REFERENCE TO RELATED APPLICATION

This application is a continuation-in-part (CIP) application claiming priority from U.S. Patent Application Serial Number 10/218,401, entitled "Methods and Apparatus for Communicating via a Radio Channel" filed August 14, 2002.

### TECHNICAL FIELD

The present disclosure relates generally to wireless communication systems, and, more particularly, to a method and apparatus for mitigating radio frequency interference between transceivers.

### BACKGROUND

Typically, standard local area network (LAN) protocols such as Ethernet provide access to network resources through wired, land line connections within a small geographic area (e.g., within an office building). However, until recently, LANs were limited to the conventional wired network connections. To increase mobility and flexibility, the concept of wireless LANs (i.e., WLANs) has been introduced. That is, WLANs provide convenient access to network resources for portable computers (e.g., a laptop computer) and handheld devices (e.g., a personal digital assistant (PDA)) both in and out of the office via an access point. In particular, the 802.11 communication protocol developed by the Institute of Electrical and Electronics Engineers (i.e., the IEEE 802.11 standard, IEEE std. 802.11-1997, published 1997) provides a standard for WLANs for wireless transmissions using spread spectrum radio frequency (RF) signals in the 2.4 gigahertz (GHz) Industrial, Scientific, and Medical (ISM) frequency band. The 802.11 communication protocol offers wireless transmission at rates of either one megabits per second (1 Mbps) or two megabits per second (2 Mbps) to access wired LANs. Based on the 802.11 communication protocol, the 802.11b communication protocol (i.e., IEEE 802.11b standard, IEEE std. 802.11b-1999, published 1999, which is also known as Wi-Fi or Wireless Ethernet) may extend the rate to 11 Mbps. The 802.11b communication protocol may also increase the RF coverage up to approximately 500 feet. Despite enhancing the ability of an electronic device to access a LAN (e.g., for web browsing and e-mail), the 802.11b communication protocol may not be optimal for establishing a wireless connection with devices in a wireless personal area network (WPAN) such as computers, cellular telephones, personal digital assistants (PDAs), and other peripherals such as a mouse. That is, a disadvantage of the 802-11b communication protocol is that a transceiver system (i.e., a radio system) operating in accordance with the 802.11b communication protocol may use an unnecessary amount of power to communicate with WPAN devices.

It is widely known that the Bluetooth communication protocol also uses short-range radio links to replace physical cables connecting between portable and/or fixed electronic devices. Like the 802.11b communication protocol, the Bluetooth communication protocol also operates in the unlicensed 2.4 gigahertz (GHz) ISM frequency band for short-range wireless connection between computers, cellular telephones, cordless telephones, PDAs, local area networks (LANs) and other peripherals such as printers, mice, and facsimile machines. In particular, the Bluetooth communication protocol may be used in wireless personal access networks (WPANs) because it requires less power than the 802.11b communication protocol. For example, a laptop notebook may be able to synchronize with a PDA, to transfer files with a desktop computer and/or another laptop notebook, to transmit or to receive a facsimile, and to initiate a print-out of a document. Thus, an advantage of the Bluetooth communication protocol is that the protocol is more robust to communicate with WPAN devices than the 802.11b communication protocol. However, a transceiver system operating in accordance with Bluetooth communication protocol may not be able to operate at sufficient power, range, and speed to access a LAN.

As noted above, both the 802.11b communication protocol and the Bluetooth communication protocol operate in the 2.4 GHz ISM frequency band. That is, the channels used by 802.11b transceiver system and the Bluetooth transceiver system may interference with each other. Thus, collision may occur when the 802.11b transceiver
US2002/107047 discloses a method of combining within one device a Home RF wireless access protocol transceiver and a worldwide digital cordless communications (WDCT) transceiver. A control sync module 28 prevents both transceivers from interfering with each by determining if the WDCT is transmitting and if so by determining on which channel the Home RF is able to transmit.. Home RF data is allowed to transmit in blank slots between transmission and reception periods of the WDCT signal. Whenever the WDCT is transmitting, the Home RF may be allowed to transmit, but on WDCT channels not in use during the transmission.
US2001/010689 discloses an apparatus that is both Bluetooth and IEEE 802.11 compliant and that uses an interoperability device to select between Bluetooth and IEEE 802.11 mode. This interoperability device has two modes, a switching mode and a multiplexing mode. In the former, the interoperability device chooses between the Bluetooth and IEEE 802.11 modes based on such factors as the user selected mode, software that determines the mode based on a user selected parameter such as when a device is in a PDA mode, or the device 'sniffing' for other devices around and determining which mode is appropriate.
WO01/84789 discloses the features of the preamble of the independent claims. In particular, this document describes a wireless communication device with a single communications interface that has dual potentially overlapping IEEE 802.11 and Bluetooth protocol support. A transaction control policy and a collision map are provided to determine which protocol to enable/disable when a conflict arises. Based on the transaction control policy and the collision map, one or more transceivers that operate according to the wireless protocols can be selectively enabled/disabled to avoid actual conflicts.
WO 36/38925 discloses a spread spectrum transceiver module utilising multiple mode transmission wherein the transceiver module can use, at any given moment, only one channel to communicate from a single device.
EP 1 052 867 discloses a system comprising a plurality of mobile stations and a plurality of local stations, wherein none of the plurality of stations is located on the same device. Priority information is provided to a local station about a plurality of incoming calls or communications coming from a plurality of mobile stations. This priority information is not indicative of a priority activity associated with a second transceiver system located on such a local station.

### BRIEF DESCRIPTION OF THE DRAWINGS

FIG. 1 is a schematic illustration of an example wireless communication system.
FIG. 2 is a more detailed view of the electronic device of FIG. 1.
FIG. 3 is a schematic illustration of example direct sequence spread spectrum (DSSS) channels.
FIG. 4 is a schematic illustration of an example frequency hopping spread spectrum (FHSS) channel in an interference zone.
FIG. 5 is a schematic illustration of another example FHSS channel in the interference zone.
FIG. 6 is a schematic illustration of still another example FHSS channel in the interference zone.
FIG. 7 is a schematic illustration of yet another example FHSS channel in the interference zone.
FIG. 8 is a flowchart illustrating the operation of the electronic device of FIG. 2.
FIG. 9 is a block illustration of a two-wire interface between transceiver systems.
FIG. 10 is a timing illustration of communication of channel information via the two-wire interface.
FIG. 11 is a table of four-bit channel codes indicative of radio channels.
FIG. 12 is a timing illustration of communication of priority information via the two-wire interface.
FIG. 13 is a timing illustration of a transceiver system.
FIG. 14 is a block illustration of a four-wire interface between transceiver systems.
FIG. 15 is a timing illustration of communication of priority information via the four-wire interface.

### DETAIL DESCRIPTION

Although the methods and apparatus disclosed herein are particularly well suited for use with a laptop computer including a transceiver system operating in accordance with the 802.11b communication protocol and a transceiver system operating in accordance with the Bluetooth communication protocol, persons of ordinary skill in the art will readily appreciate that the teachings herein are in no way limited to laptop computers. On the contrary, persons of ordinary skill in the art will readily appreciate that the teachings of this disclosure can be employed with any electronic device such as a handheld computer, a cellular telephone, and a personal digital assistant (PDA) regardless of the wireless communication protocols it employs.

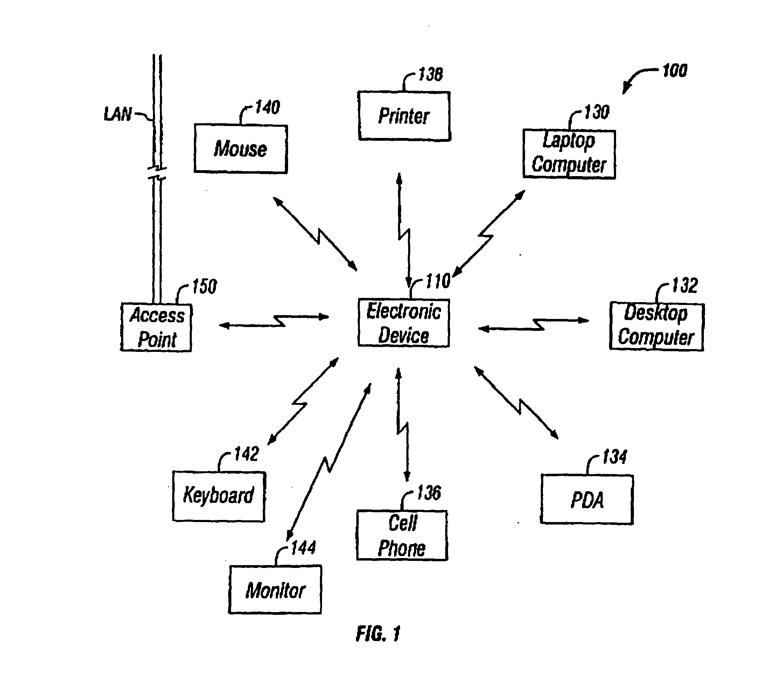

FIG. 1 is a schematic illustration of an example wireless communication system 100. In the wireless communication system 100, an electronic device 110 such as a portable computer may be in communication with other portable or fixed electronic devices such as, but not limited to, a laptop computer 130, a desktop computer 132, a personal digital assistant (PDA) 134, a cellular telephone 136, and a printer 138. Although in the illustrated example, the electronic device 110 is shown as a portable computer, persons of ordinary skill in the art will appreciate that the electronic device 110 may be, but is not limited to, a laptop computer, a notebook computer, a personal digital assistant (PDA), a cellular telephone, etc. As used herein "portable computer" refers to any computer (e.g., a laptop computer, a notebook computer) that is designed to be carried by a person. The electronic device 110 may also be in communication with a human interface device (HID) such as, but not limited to, a mouse 140, a keyboard 142, and a monitor 144. Further, the electronic device 110 may be in communication with an access point 150 operatively coupled to a local area network (LAN) to access, for example, the Internet, the Intranet, and other servers.

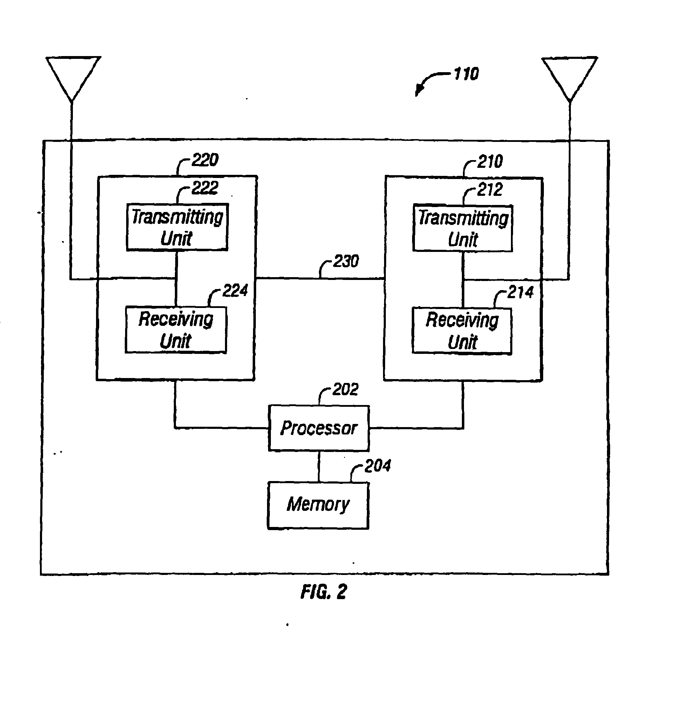

As explained in detail below, the illustrated electronic device 110 generally includes a first transceiver system and a second transceiver system operable for wireless communication with other electronic devices or networks in a wireless personal access network (WPAN) and a wireless local area network (WLAN). One possible implementation of the electronic device 110 is shown in FIG. 2. As shown in that figure, the electronic device 110 generally includes a processor 202, a memory 204, a first transceiver system 210 and a second transceiver system 220. The processor 202 is operatively coupled to the memory 204, which stores a computer program as described in detail below or a set of operating instructions for the processor 202. Accordingly, the processor 202 executes the program or the set of operating instructions such that the electronic device 110 operates to provide the environments reflected in FIG. 1. The program or set of operating instructions may be embodied in a computer-readable medium such as, but not limited to, paper, a programmable gate array, an application specific integrated circuit (ASIC), an erasable programmable read only memory (EPROM), a read only memory (ROM), a random access memory (RAM), a magnetic media, and an optical media.

The processor 202 is also operatively coupled to the first transceiver system 210 and the second transceiver system 220. The first transceiver system 210 may be operatively coupled to the second transceiver system 220 via a communication link 230. For example, the first transceiver system 210 may be in communication with the second transceiver system 220 via a communication bus. In another example, the first transceiver system 210 may be directly wired to the second transceiver system 220 (i.e., a hardwire link). Alternatively, the communication link 230 may be a wireless link such as a radio frequency link or an infrared link. Each of the first and second transceiver systems 210, 220 may include, but is not limited to, a transmitting unit generally shown as 212 and 222, and a receiving unit generally shown as 214 and 224. The transmitting unit 212 and the receiving unit 222 may be configured as multiple units as shown in FIG. 2 or be configured as a single (e.g., integral or unitary) unit.

As noted above, the first and second transceiver systems 210, 220 may provide wireless communication services to the electronic device 110. To illustrate the concept of communicating via a radio channel, the first transceiver system 210 may operate in accordance with a first wireless communication protocol, and the second transceiver system 220 may operate in accordance with a second wireless communication protocol. For example, the first wireless communication protocol may be, but is not limited to the Institute of Electrical and Electronics Engineers (IEEE) 802.11b communication protocol (the IEEE standard 802.1 lb for "High Rate" Wireless Local Area Network), and the second wireless communication protocol may be, but is not limited to, the Bluetooth communication protocol. Accordingly, the first transceiver system 210 may operate in accordance with the IEEE 802.11b communication protocol (hereinafter "802.11b transceiver system"), and the second transceiver system 220 may operate in accordance with the Bluetooth communication protocol (hereinafter "Bluetooth transceiver system"). Both the 802.11b transceiver system 210 and the Bluetooth transceiver system 220 may be operable to communicate with other devices and/or networks via radio channels. Persons of ordinary skill in the art will readily appreciate that the 802.1 lb transceiver system 210 and the Bluetooth transceiver system 220 may use well known direct sequence spread spectrum (DSSS) and frequency hopping spread spectrum (FHSS) algorithms, respectively, to select radio channels for communication.

Accordingly, to provide short range ad-hoc connections between devices in WPANs and connections to WLANs, two transceiver systems operating in accordance with different communication protocols may be integrated into an electronic device. For example, a laptop notebook may include two transceiver systems with one transceiver system operating in accordance with the 802.11b communication protocol (i.e., 802.11b transceiver system) and the other transceiver system operating in accordance with the Bluetooth communication protocol (i.e., Bluetooth transceiver system). The 802.11b transceiver system uses a direct sequence spread spectrum (DSSS) modulation technique whereas the Bluetooth transceiver system uses a frequency hopping spread spectrum (FHSS) modulation technique. In particular, the DSSS modulation technique spreads data transmissions across 22 MHz segments of the entire available frequency band in a prearranged scheme. Within the 2.4 GHz frequency band, the 802.11b communication protocol defines 14 "center frequency channels" with channels 1 through 11 supported within the United States. and channels 12 through 14 supported outside the U.S. In particular, channel 1 at 2.412 GHz, channel 6 at 2 437 GHz, and channel 11 at 2.462 GHz are the more commonly used non-overlapping channels. Channels 1, 6. and 11 are spaced apart by 25 MHz. The 802.11b communication protocol may also be configured to provide six overlapping channels spaced 10 MHz apart. Typically, the DSSS modulation technique uses one channel and spreads data transmissions across a twenty-two megahertz band (i.e., a bandwidth of 22 MHz). Further, the 802.11b transceiver system may encode data with a code known only to certain 802.11b transceiver systems so that data transmissions may not be as susceptible for intruders to intercept and decipher. With FHSS modulation technique, the Bluetooth transceiver system is synchronized to hop from channel to channel in a predetermined pseudorandom sequence known only to certain Bluetooth transceiver systems. The Bluetooth communication protocol includes up to 79 narrow channels with each channel having a one megahertz band (i.e., a bandwidth of 1 MHz in between 2.4 and 2.484 GHz). Typically, the FHSS modulation technique uses a majority of the channels and hops between the channels for data transmissions. As a result, the 802.11b transceiver system may be used for WLAN communication, and the Bluetooth transceiver system may be used for WPAN communication.

A basic flow for scheduling communication via a radio channel that may be applied with the electronic device 110 shown in FIGs. 1 and 2 may start with the Bluetooth transceiver system 220 selecting a radio channel for communication (i.e., a selected radio channel). As used herein "communication" refers to any transmission and/or reception of a signal. For example, the selected radio channel may be used by the Bluetooth transceiver system 220 for transmitting a file to a desktop computer and/or receiving a command from a mouse. Persons of ordinary skill in the art will appreciate that selection of a radio channel may be implemented in many ways. For example, the Bluetooth transceiver system 220 may use a well known frequency hopping spread spectrum (FHSS) algorithm to select the radio channel for communication (e.g., an FHSS channel). The Bluetooth transceiver 220 may receive an 802.11b operating signal from the 802.11b transceiver system via the communication link 230. The 802.11b operating signal may include channel information indicative of the DSSS channel such as, but not limited to, a reference corresponding to a radio channel for communication associated with the 802.11b transceiver system 210 (e.g., a DSSS channel), an operating mode of the DSSS channel (e.g., active or inactive), and a priority level of communication associated with the 802.11b transceiver system 210 (e.g., low or high) via the DSSS channel. As used herein "DSSS channel" refers to any radio channel selected by the 802.11b transceiver system 210 to communicate with other electronic devices or networks in the wireless communication system 100 such as an access point (one shown as 150 in FIG. 1) or other 802.11b client via the ad hoc mode. Thus, the reference corresponding to the DSSS channel may be, but is not limited to, a letter, an alphanumeric character, and a number such as channel 1, channel 6, and channel 11 of any well known DSSS algorithm. The operating mode indicates whether the 802.11b transceiver system 210 is using and/or is intending to use the DSSS channel for communication. The priority level indicates whether the communication associated with the 802.11b transceiver system 210 via the DSSS channel has higher priority over the communication associated with the Bluetooth transceiver system 220 via the FHSS channel.

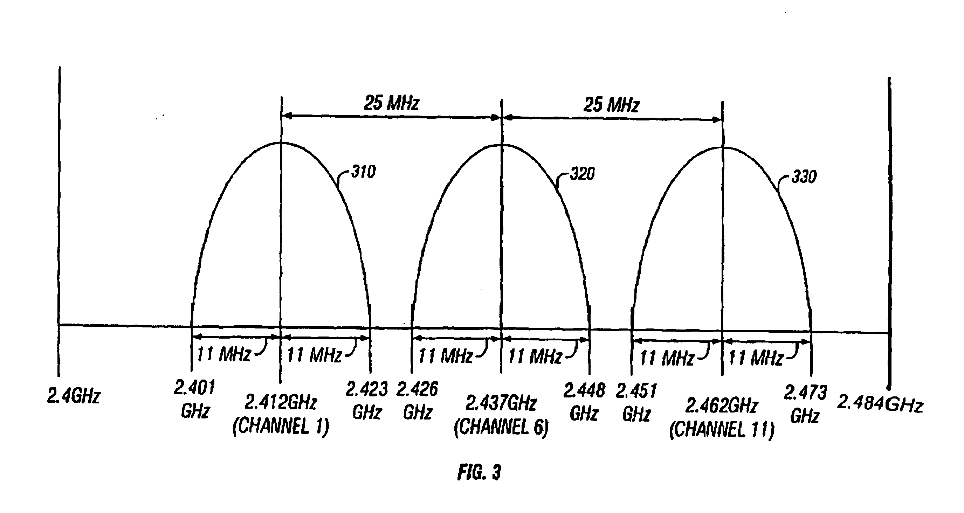

Based on the channel information provided by the 802.11b transceiver system 210, the electronic device 110 (e.g., via the Bluetooth transceiver system 220) determines whether the FHSS channel may be available for communication associated with the Bluetooth transceiver system 220 without causing radio interference between the FHSS channel and the DSSS channel. That is, the electronic device 110 determines whether the FHSS channel is in an interference zone of the DSSS channel (i.e., the frequency band of the FHSS channel is within, overlaps, adjacent to or substantially proximate to the frequency band of the DSSS channel) based on the reference corresponding to the DSSS channel. As noted above, persons of ordinary skill in the art will appreciate that the 802.11b transceiver system may use a DSSS algorithm to select the DSSS channel. Referring to FIG. 3, for example, the DSSS algorithm may provide the 802.11b transceiver system with three non-overlapping DSSS channels (i.e., channels, 1, 6, and 11) generally shown as 310, 320, and 330. The three non-overlapping channels are spaced 25 MHz apart in the 2.4 gigahertz (GHz) Industrial, Scientific, and Medical (ISM) frequency band (i.e., between 2.4 and 2.484 GHz). Each of the three non-overlapping channels has a bandwidth of 22 MHz. In particular, channel 1 at 2.412 GHz extends from 2.401 to 2-423 GHz (shown as 310), channel 6 at 2.437 GHz extends from 2.426 to 2.448 GHz (shown as 320), and channel 11 at 2.462 GHz extends from 2.451 to 2.473 GHz (shown as 330). Alternatively, the 802.11b transceiver system may be configured to operate any of the fourteen channels available for the 802.11b communication protocol.

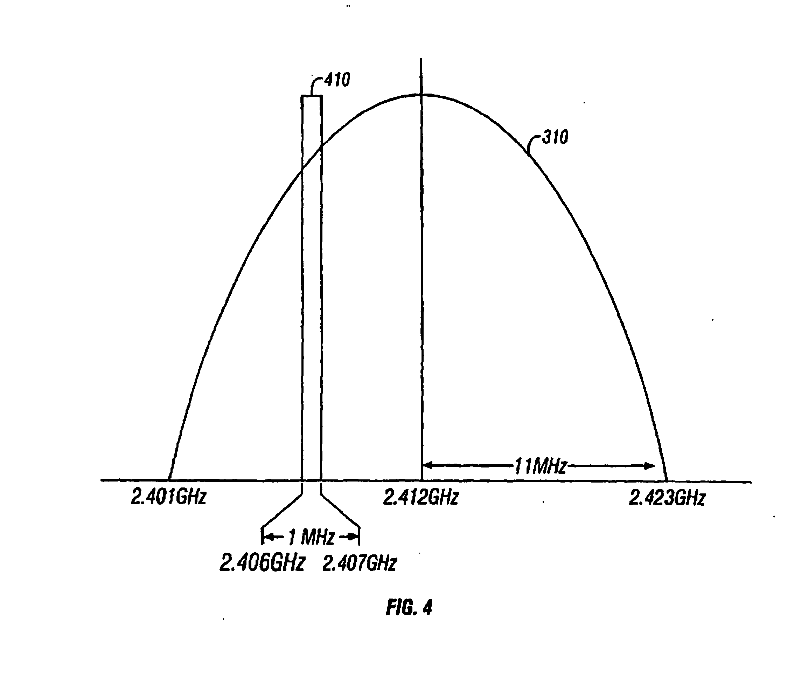

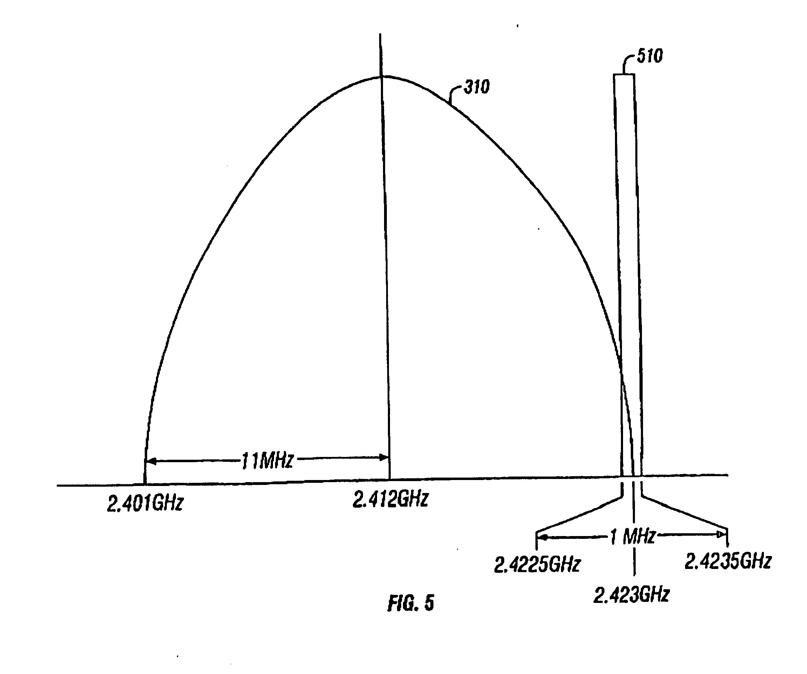

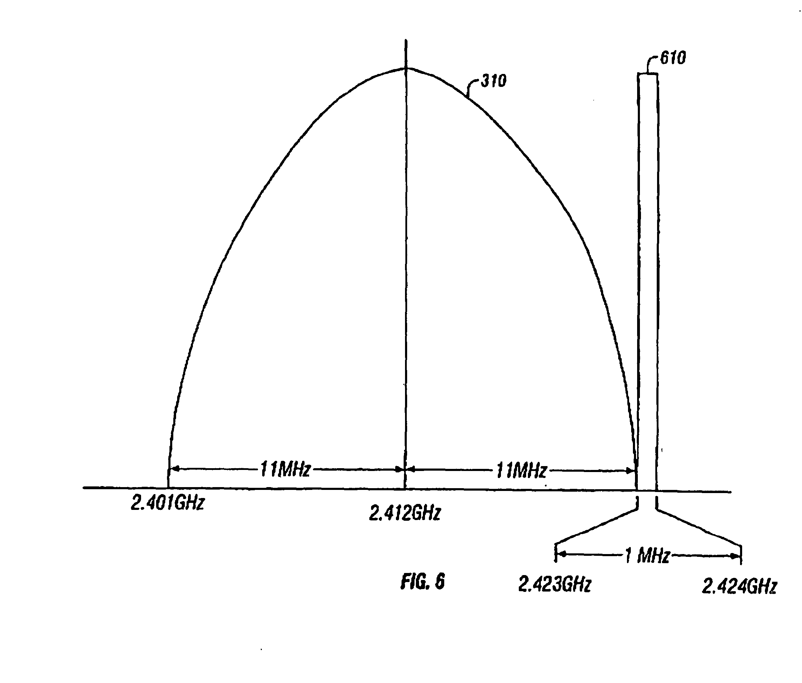

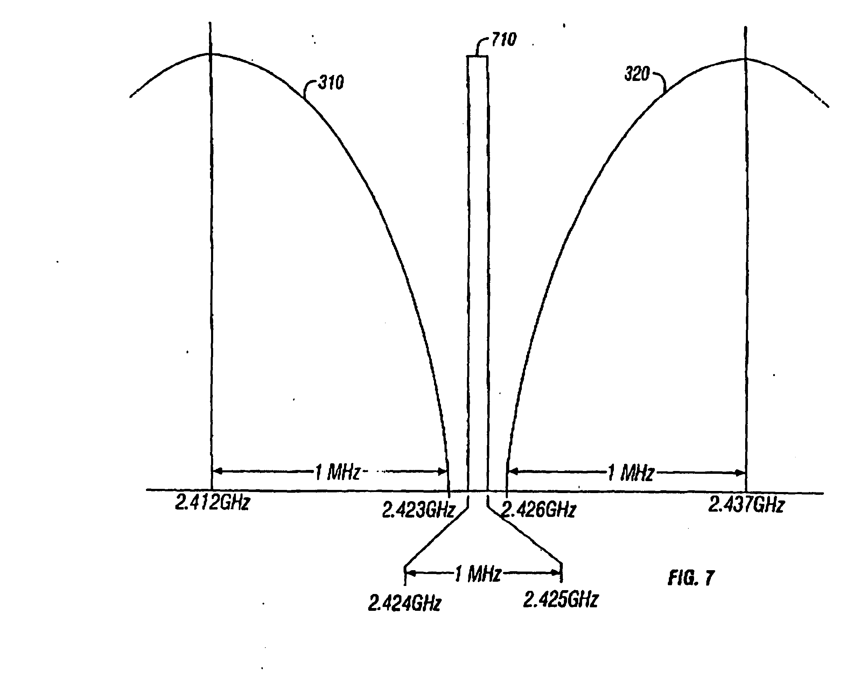

Persons of ordinary skill in the art will appreciate that the Bluetooth transceiver system may use an FHSS algorithm to select the FHSS channel. In particular, the FHSS algorithm may provide the Bluetooth transceiver system with a radio channel having a bandwidth of 1 MHz in the 2.4 GHz ISM frequency band for communication. Thus, there may be radio interference between the 802.11b transceiver system and the Bluetooth transceiver system 220 because the FHSS channel may be in the interference zone of the DSSS channel. Referring to FIG. 4, for example, the FHSS channel 410 extending from 2.406 to 2.407 GHz is within the DSSS channel 310. As a result, the FHSS 410 may be in the interference zone of the DSSS channel 310. In another example, the FHSS channel 510 shown in FIG. 5 extends from 2.4225 to 2.4235 GHz. The FHSS channel 510 may be in the interference zone of the DSSS channel 310 because the FHSS channel 510 overlaps the DSSS channel 310 (i.e., from 2.4225 to 2.423 GHz). As shown in FIG. 6. the FHSS channel 610 extends from 2.423 to 2.424 GHz. Although, the FHSS channel 610 is adjacent to the DSSS channel 310, the FHSS channel 610 may still be in the interference zone of the DSSS 310 because marginal radio interference may exist with the FHSS 610 being on the edge of the DSSS channel 310. Further, marginal radio interference may exist with the FHSS channel 710 being substantially proximate to the DSSS channel 310 as shown in FIG. 7. As a result, the FHSS channel 710 may also be in the interference zone of the DSSS channel 310.

If the FHSS channel is not in the interference zone of the DSSS channel (e.g., the FHSS channel does not overlap the DSSS channel and the FHSS channel is not substantially proximate to the DSSS channel) then the Bluetooth transceiver system 220 may operate the FHSS channel to communicate with other electronic devices or networks in the wireless communication system 100 such as a PDA (one shown as 134 in FIG. 1). On the other hand, if the FHSS channel is in the interference zone of the DSSS channel as described above then the electronic device 110 may determine whether the DSSS channel is active for communication associated with the 802.11b transceiver system 210 based on the operation mode of the DSSS channel. For example, the electronic device 110 may determine whether the DSSS channel is active for communication associated with the 802.11b transceiver system 210 if the frequency band of the FHSS channel (shown as 410 in FIG. 4) is within the frequency band of the DSSS channel 310.

When the FHSS channel is in the interference zone, but the operation mode of the DSSS channel is inactive (i.e., the 802.11b transceiver system 210 is not using and/or is not intending to use the DSSS channel for communication). the Bluetooth transceiver system 220 may use the FHSS channel for communication. In contrast, when the operation mode of the DSSS channel is active (i.e., the 802.11b transceiver system 210 is using and/or is intending to use the DSSS channel for communication). the electronic device 110 may determine whether communication associated with the 802.11b transceiver system 210 has priority over communication associated with the Bluetooth transceiver system 220. When the communication associated with the 802.11b transceiver system 210 has higher priority than the communication associated with the Bluetooth transceiver system 220, the Bluetooth transceiver system 220 may suspend its communication via the FHSS channel. For example, the Bluetooth transceiver system 210 may entirely abort its communication via the FHSS channel or wait until the communication associated with the 802.11b transceiver system 210 via the DSSS channel is completed before using the FHSS channel to communicate with other devices or networks in the wireless communication system 100.

If the communication associated with the Bluetooth transceiver system 220 has higher priority than the communication associated with the 802.11b transceiver system 210 then the Bluetooth transceiver system 220 may transmit a Bluetooth operating signal to the 802.11b transceiver system 210. In particular, the Bluetooth operating signal may indicate that the communication associated with the Bluetooth transceiver system 220 has higher priority than the communication associated with the 802.11b transceiver system 210. In response to the Bluetooth operating signal, the 802.11b transceiver system 210 may suspend its communication via the DSSS channel to avoid interference with the communication associated with the Bluetooth transceiver system 220. That is, the 802.11b transceiver system 210 may entirely abort its communication via the DSSS channel or wait until the communication associated with the Bluetooth transceiver system 220 via the FHSS channel is completed to communicate via the DSSS channel again. As a result, radio interference between the 802.11b transceiver system 210 and the Bluetooth transceiver system 220 may be mitigated.

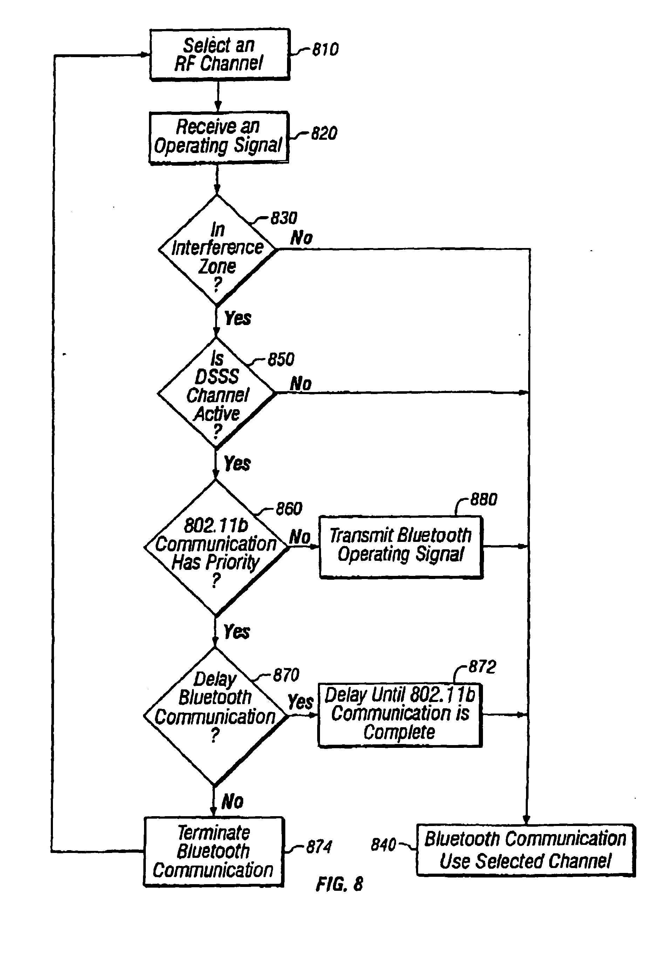

One possible implementation of the computer program executed by the electronic device 110 to provide the environments reflected in FIG. 1 is illustrated in FIG. 8. Persons of ordinary skill in the art will appreciate that the computer program can be implemented in any of many different ways utilizing any of many different programming codes stored on any of many tangible mediums such as a volatile or nonvolatile memory or other mass storage device (e.g., a floppy disk, a compact disc (CD), and a digital versatile disc (DVD)). Thus, although a particular order of steps is illustrated in FIG. 8, persons of ordinary skill in the art will appreciate that these steps can be performed in other temporal sequences. Again, the flow chart is merely provided as an example of one way to program the electronic device 110 to communicate via a radio channel to reduce interference between the first and second transceiver systems 210, 220 within the electronic device 110.

Assuming that the electronic device 110 includes an 802.11b transceiver system and a Bluetooth transceiver system as described above, the Bluetooth transceiver system uses a spread spectrum technique such as the FHSS algorithm to select a radio channel for communication, i.e., an FHSS channel (block 810 of FIG. 8). Persons of ordinary skill in the art will readily appreciate that the 802.11b transceiver system may use a well known direct sequence spread spectrum (DSSS) algorithm to select a radio channel for communication (i.e., a DSSS channel). At block 820, the Bluetooth transceiver system also receives an 802.11b operating signal from the 802.11b transceiver system via the wired communication link 230. The 802.11b operating signal includes channel information indicative of the DSSS channel such as, but not limited to a reference corresponding to the DSSS channel that the 802.11b transceiver system is using and/or is intending to use for communication (e.g., a channel number), an operation mode of the DSSS channel (e.g., active or inactive), and a priority level of communication associated with the 802.11b transceiver system via the DSSS channel (e.g., low or high).

Upon selection of the FHSS channel for communication and reception of the 802.11b operating signal from the 802.11b transceiver system via the wired communication link 230, the electronic device 110 (e.g., via the Bluetooth transceiver system) determines whether the FHSS channel is available for communication associated with the Bluetooth transceiver system based on channel information indicative of the DSSS channel.

To determine whether the FHSS channel is available for communication, the electronic device 110 determines whether the FHSS channel is in an interference zone of the DSSS channel (block 830). Persons of ordinary skill in the art will appreciate that there are many ways for the electronic device 110 to determine whether the FHSS channel is in an interference zone of the DSSS channel as shown in FIGs. 4, 5, 6 and 7. For example, the electronic device 110 may use a look-up table to determine whether the FHSS channel is in the interference zone with the DSSS channel based on the channel number of the DSSS channel. In another example, the electronic device 110 may use hardware components such as, but not limited to, a comparator, to determine whether the bandwidth of FHSS channel is in the interference zone of the bandwidth of the DSSS channel.

Referring back to FIG. 8, when the FHSS channel is not in the interference zone of the DSSS channel, the Bluetooth transceiver system may use the FHSS channel to communicate with other electronic devices, human interface devices. access points, etc. within the wireless communication system 100 (block 840). If the FHSS channel is in the interference zone of the DSSS channel, control proceeds to block 850. At block 850. the electronic device 110 (e.g., via the Bluetooth transceiver system) determines whether the 802.11b transceiver system is using and/or is intending to use the DSSS channel for communication (e.g., transmission and/or reception of a signal by the 802.11b transceiver system) based on the operating mode of the DSSS channel. When the electronic device 110 detects that the DSSS channel is inactive (i.e., the 802.11b transceiver system is not using and/or is not intending to use the DSSS channel), the Bluetooth transceiver system may use the selected RF channel for communication as described above (block 840).

If the electronic device 110 detects that the DSSS channel is active (i.e., the 802.11b transceiver system is using and/or is intending to use the DSSS channel), control continues to block 860. At block 860, the electronic device 110 determines whether communication associated with the 802.11b transceiver system via the DSSS channel has higher priority than the communication associated with the Bluetooth transceiver system via the FHSS channel. For example, a high priority communication associated with the 802.11b transceiver system may be, but is not limited to, an acknowledgement of a reception of data packets, a CTS (clear-to-send) reception, and a beacon reception. When the electronic device 110 detects that the communication associated with 802.11b transceiver system via the DSSS channel has higher priority (block 860), the electronic device 110 may determine whether to suspend the communication associated with the Bluetooth transceiver system via the FHSS channel until the 802-11b communication is complete (block 870). For example, the Bluetooth transceiver system may wait and delay its communication via the FHSS channel (block 872). Alternatively, the Bluetooth transceiver system may entirely terminate its communication via the FHSS channel (block 874), and control returns to block 810 to select another radio channel for communication.

If the electronic device 110 detects that the communication associated with the Bluetooth transceiver system via the FHSS channel has higher priority than the communication associated with the 802.11b transceiver system via the DSSS channel. control proceeds to block 880. At block 880, the Bluetooth transceiver system may transmit a Bluetooth operating signal (i.e., a priority signal) to the 802.11b transceiver system, and control continues to block 840. The Bluetooth operating signal indicates that the communication associated with the Bluetooth transceiver system via the FHSS channel has priority over the communication associated with the 802.11b transceiver system via the DSSS channel. A high priority communication associated with the Bluetooth transceiver system may be, but is not limited to, device discovery, connection establishment, connection maintenance, and human interface device (HID) profile. In response to the Bluetooth operating signal, the 802.11b transceiver system may delay or entirely terminate its communication via the DSSS channel. As a result, radio interference between the Bluetooth transceiver system and the 802.11b transceiver system may be reduced by scheduling communication via the FHSS channel and the DSSS channel.

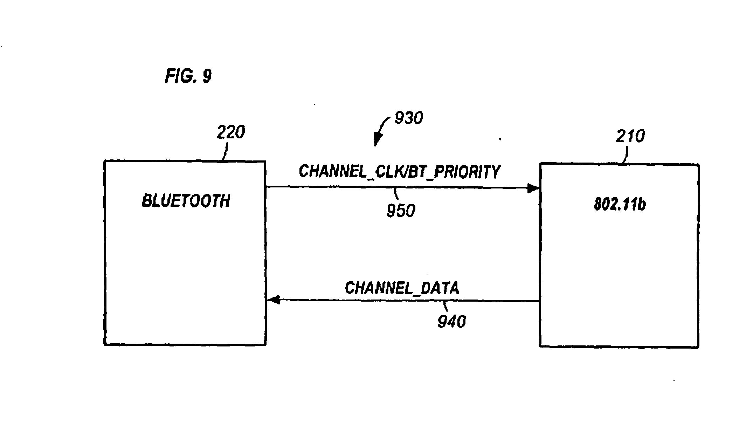

As noted above, the 802.11b transceiver system 210 and the Bluetooth transceiver system 220 may be operatively coupled to each other via a communication link 230 (shown in FIG. 2). The communication link 230 may be, but is not limited to, a wire interface (e.g., a hardwire link) and a wireless link (e.g., a radio link or an infrared link). The communication link 230 may include a plurality of paths so that the transceiver systems (shown as 210 and 220) may communicate with each other. To illustrate this concept, the communication link 230 may be a two-wire interface 930 as shown in FIG. 9. In particular, the two-wire interface 930 includes a channel data line 940 and a channel clock line 950. The 802.11b transceiver system 210 may transmit a channel data signal (shown as CHANNEL_DATA) via the channel data line 940 so that the Bluetooth transceiver system 220 may receive channel information from the 802.11b transceiver system 210. As described detail below, channel information may be, but is not limited to a four-bit code indicative of a radio channel associated with the 802.11b transceiver system 210. In response to the channel data signal from the 802.11b transceiver system 210 via the channel data line 940, the Bluetooth transceiver system 220 may transmit a channel clock signal (shown as CHANNEL_CLK) via the channel clock line 950.

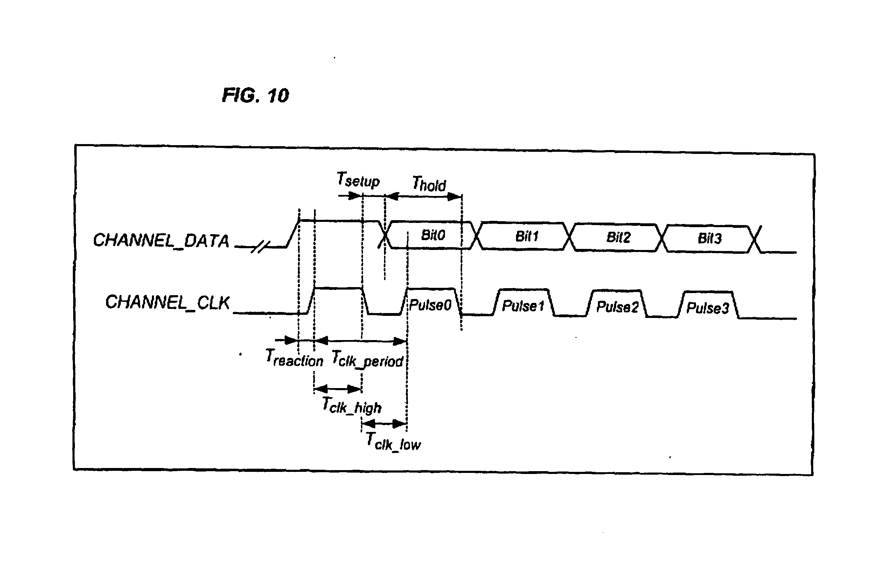

Referring to FIG. 10, for example, the Bluetooth transceiver system 220 may monitor the channel data line 940 for CHANNEL_DATA. Upon detecting a rising edge of CHANNEL_DATA (i.e., the beginning of START BIT), the Bluetooth transceiver system 220 may start the channel clock line 950 within a reaction time period T_{reaction} to sample CHANNEL_DATA with a clock pulse T_{clk-period}. The Bluetooth transceiver system 220 may sample CHANNEL_DATA at a rising edge of T_{clk_high} of the clock pulse T_{clk_period} (i.e., when CHANNEL_CLK goes to a high state at the beginning of T_{clk_high}). In particular, the clock pulse T_{clk_period} may include T_{clk_high} and T_{clk_low}. Accordingly, the 802.11b transceiver system 210 may prepare to transmit channel information during Tₛₑₜᵤₚ after a falling edge of T_{clk_low} of the clock pulse T_{clk_period} (i.e., when CHANNEL_CLK goes to a low state at the beginning of T_{clk_low}). The Bluetooth transceiver system 220 may transmit four additional clock pulses to receive a four-bit code indicative of a radio channel associated with the 802.11b transceiver system 210 (e.g., a radio channel currently in use by the 802.11b transceiver system 210).

After the START BIT, the 802.11b transceiver system 210 may transmit the channel number corresponding to the radio channel currently in use by the 802.11b transceiver system 210 to the Bluetooth transceiver system 220. For example. the channel number may be a four-bit code, generally shown as Bit0, Bit1, Bit2, and Bit3. transmitted by the 802.11b transceiver system 210. The Bluetooth transceiver system 220 may transmit four clock pulses, generally shown as Pulse0. Pulse1, Pulse2, and Pulse3. to read Bit0, Bit1, Bit2, and Bit3, respectively. At the end of Bit3, the 802.11b transceiver system 210 may set CHANNEL_DATA to a low state Until it is ready to transmit new channel information to the Bluetooth transceiver system 220.

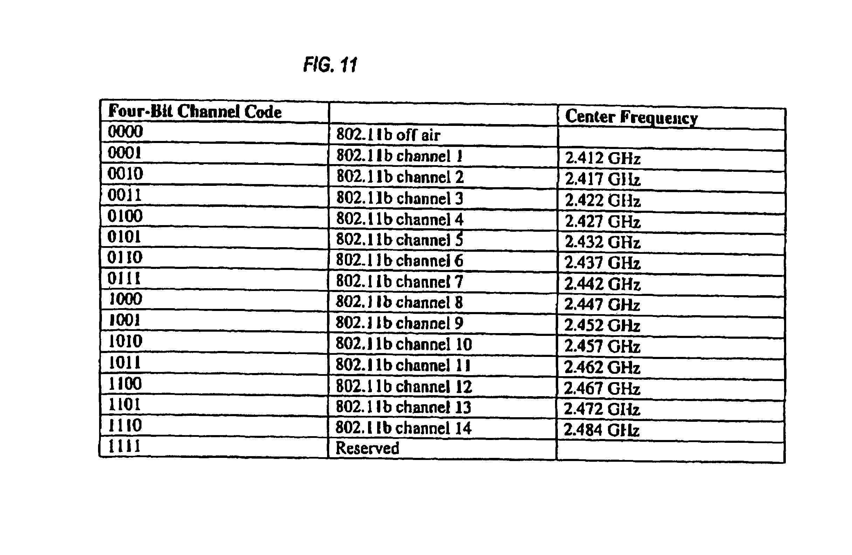

Persons of ordinary skill in the art will readily recognize that the 802.11b communication protocol defines 14 "center frequency channels" (i.e., DSSS channels) within the ISM 2.4 GHz frequency band. To illustrate the concept of a four-bit code to represent channel information associated with the 802.11b transceiver system, the scheme shown in FIG. 11 may be implemented. As an example, the 0000 channel code may indicate that all channels may be available to the Bluetooth transceiver system 220 for communication. Accordingly, a priority signal from the Bluetooth transceiver system 220, if any, may be ignored by the 802.11b transceiver system 210.

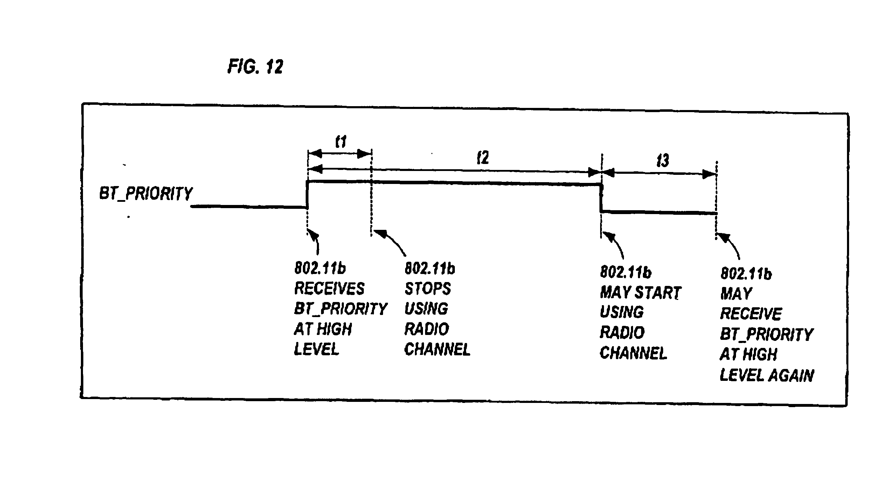

Turning to the priority signal, the Bluetooth transceiver system 220 may transmit the priority signal via the channel clock line 950 when the channel clock line 950 is not used to obtain channel information from the 802.11b transceiver system 210. That is, the Bluetooth transceiver system 220 may use the channel clock line 950 to transmit either the channel clock signal (shown as CHANNEL_CLK in FIG. 10) or the priority signal. Because the 802.11b transceiver system 210 has priority as a default, the Bluetooth transceiver system 220 may use the priority signal to override the default. The priority signal may include information associated with a high priority communication such as, but not limited to, device discovery, connection establishment, connection maintenance, and human interface device (HID) profile. Referring to FIG. 12, for example, the 802.11b transceiver system 210 may sample the channel clock line 950 and receive the priority signal (shown as BT_PRIORITY) from the Bluetooth transceiver system 220 at the beginning of time period t1. In response to BT_PRIORITY being at a high state, the 802.11b transceiver system 210 may suspend all non-critical communication via the radio channel by the end of the time period t1 (i.e., the time period t1 is the maximum time for the 802.11b transceiver system 210 to react to the priority signal from the Bluetooth transceiver system 220). The Bluetooth transceiver system 220 may keep BT_PRIORITY at a high state for time period t2. At the end of the time period t2, the 802.11b transceiver system 210 may resume communication via the radio channel (i.e., the time period t2 is the maximum amount of time for the Bluetooth transceiver system 220 to transmit its priority signal). For the duration of time period t3, BT_PRIORITY is at a low state before going to a high state again. That is, the Bluetooth transceiver system 220 waits through the time period t3 before it may transmit another priority signal to the 802.11b transceiver system 210 via the channel clock line 950.

During transmission of the priority signal, the Bluetooth transceiver system 220 may monitor the channel data line 940 for an indication from the 802.11b transceiver system 210 of a channel data signal. To receive the channel data signal, the Bluetooth transceiver system 220 may delay and/or terminate the transmission of the priority signal and prepare to receive the channel data signal from the 802.11b transceiver system 210 via the channel data line 940. Accordingly, the Bluetooth transceiver system 220 may proceed to sample the channel data line 940 prior to receiving the four-bit channel code as described above.

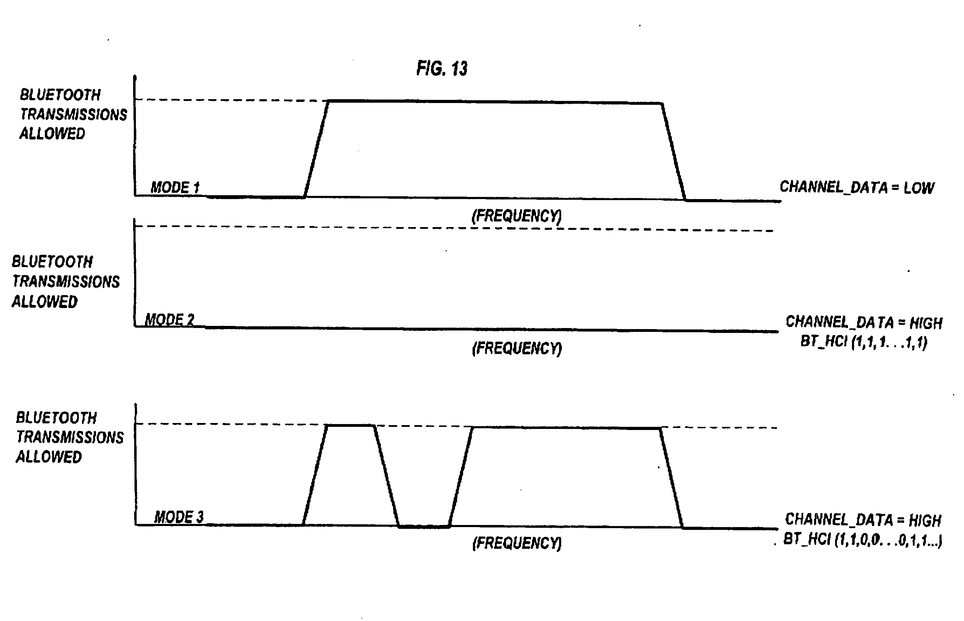

The Bluetooth transceiver system 220 may operate in a variety of modes based on the channel data line 940 and a host controller interface (HCl) command (shown as BT_HCl in FIG. 13). For example, the HCI command maybe, but is not limited to, an 80 bit code [0:79] to designate a FHSS channel operable by the Bluetooth transceiver system 220 for communication. When the channel data line 940 is at a low state, the Bluetooth transceiver system 220 may be allowed to use any of the 79 FHSS channels regardless of the HCI command (shown as mode 1). Here, the 802.11b transceiver system 210 may be inactive (i.e., turned off or operating in a power saving mode).

When the channel data line 940 is at a high state, however, the Bluetooth transceiver system 220 may operate to avoid either one of or all 14 radio channels operable by the 802.11b transceiver system 210 (i.e., DSSS channels) based on the HCI command. In particular, each parameter of the HCI command may all be at a high state (i.e., BT HCI (1, 1, 1 ... 1, 1)) so that the Bluetooth transceiver system 220 may avoid all of the DSSS channels because a communication link associated with the 802.1 lb transceiver system 210, for example, may be lost (shown as mode 2). To reestablish that communication link, the 802.11b transceiver system 210 may need to select from all of the DSSS channels. Alternatively, the HCI command may instruct to the Bluetooth transceiver system 220 to avoid a particular DSSS channel (e.g., BT_HCI (1, 1, 0, 0 ... 0, 1, 1 ... 1)) because the DSSS channel, for example, may be currently in use by the 802.11b transceiver system 210 (shown as mode 3).

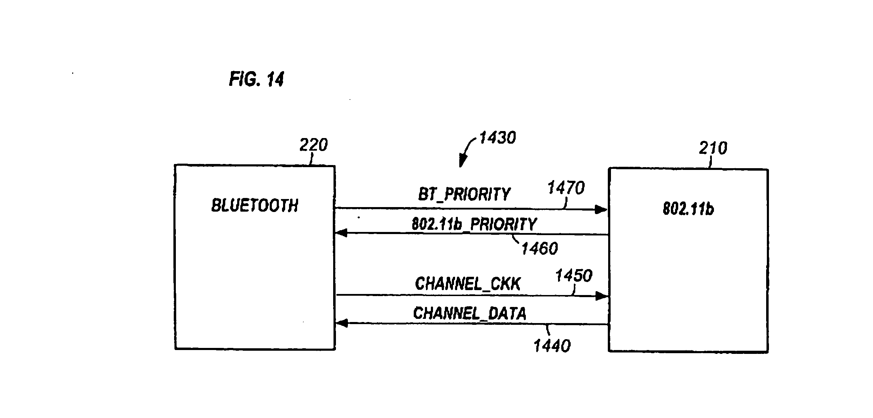

Referring to FIG. 14, another example of the wired communication link 230 is shown. The wired communication link 230 may be a four-wire interface 1430 including a channel data line 1440, a channel clock line 1450, a first priority line 1460, and a second priority line 1470. The channel data line 1440 and the channel clock line 1450 may operate similar to the channel data line 940 and the channel clock line 950 as described above, respectively. However, the Bluetooth transceiver system 220 may not use the channel clock line 1450 to transmit the priority signal. Instead, the second priority line 1470 may be used to relay the priority signal (i.e., BT_PRIORITY) from the Bluetooth transceiver system 220 to the 802.11b transceiver system 210 in a similar fashion as shown in FIG. 12. In turn, the 802.11b transceiver system 210 may also transmit a priority signal (i.e., 802.11b_PRIORITY) to the Bluetooth transceiver system 220 via the first priority line 1460.

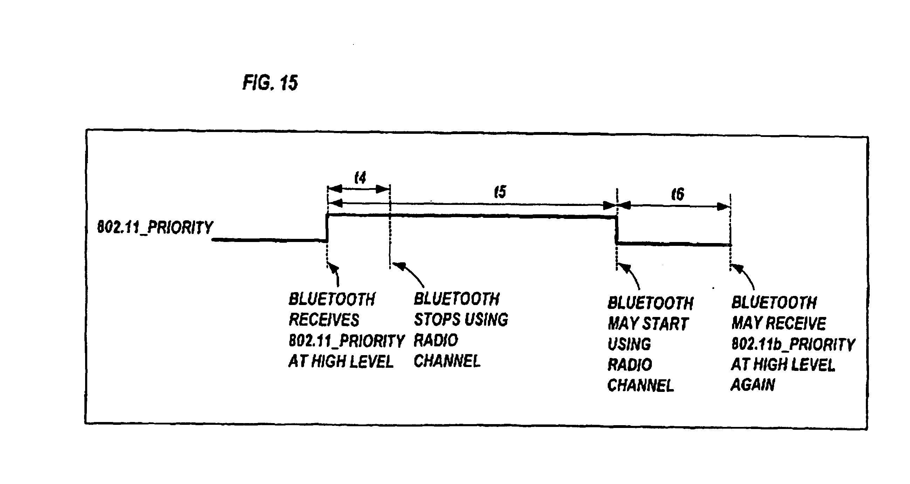

In particular, the Bluetooth transceiver system 220 may receive the priority signal (shown as 802.11b_PRIORITY) from the 802.11b transceiver system 210 at the beginning of a time period t4 as shown in FIG. 15. Responsive to 802.11b_PRIORITY being at a high state, the Bluetooth transceiver system 220 may suspend all non-critical communication via the radio channel by the end of the time period t4 (i.e., the time period t4 is the maximum time for the Bluetooth transceiver system 220 to react to the priority signal from the 802.11b transceiver system 210). The 802.11b transceiver system 210 may keep 802.11b_PRIORITY at a high state for time period t5. At the end of time period t5, the Bluetooth transceiver system 220 may resume communication via the radio channel (i.e., the time period t5 is the maximum time for the 802.11b transceiver system 210 to transmit its priority signal). For the duration of time period t6, BT_PRIORITY is at a low state before going to a high state again. That is, the 802.11b transceiver system 210 may wait through the time period t6 before it may transmit another priority signal to the Bluetooth transceiver system 220 via the first priority line 1460.

As a result, the 802.11b transceiver system 210 may either communicate a radio channel currently in use by the 802.11b transceiver system 210 to the Bluetooth transceiver system 220 so that the Bluetooth transceiver system 220 may avoid all non-critical communication via the radio channel or indicate that no radio channel is currently in use by the 802.11b transceiver system 210 so that the Bluetooth transceiver system 220 may communicate via the radio channel.

Although much of the above discussion has focused on reducing radio interference between a transceiver system operating in accordance with 802.11b communication protocol and a transceiver system operating in accordance with Bluetooth communication protocol, persons of ordinary skill in the art will appreciate that transceiver systems operating in accordance with other communication protocols may be used within a wireless communication system or an electronic device such as 802.11a and 802.11g communication protocols.

Many changes and modifications to the embodiments described herein could be made. The scope will become apparent from the appended claims.

## Claims

1. A method comprising:
providing a first device (110) containing a first transceiver system (210) that transmits data using a first communication link with a first protocol and a second transceiver system (220) that transmits data using a second communication link with a second protocol, wherein first transceiver system (210) and the second transceiver system (220) are capable of transmitting over the same frequency band;
**characterized in** by further comprising:
providing channel information (CHANNEL_DATA) from the first transceiver system (210) to the second transceiver system (220) via a first path (1440) of a third communication link (230) separate from the first and second communication link, the channel information (CHANNEL_DATA) being indicative of a radio channel (310; 320; 330) of the first communication link; and
providing priority information (BT_PRIORITY) from the second transceiver system (220) to the first transceiver system (210) via a second path (1470) of the third communication link (230), the priority information (BT_PRIORITY) being indicative of a priority activity associated with the second transceiver system (220), wherein the channel information (CHANNEL_DATA) and the priority information (BT_PRIORITY) are used to determine channel availability and priority for allowing one of either the first transceiver system (210) or the second transceiver system (220) to communicate without interference from the other.

2. A method as defined in claim 1, wherein providing channel information (CHANNEL_DATA) from the first transceiver system (210) to the second transceiver system (220) via the first path (1440) of the third communication link (230) comprises providing channel information (CHANNEL_DATA) from the first transceiver system (210) to the second transceiver system (220) via a first path (1440) of at least one of a wire interface or a wireless link between the first transceiver system (210) and the second transceiver system (220).

3. A method as defined in claim 1, wherein providing channel information (CHANNEL_DATA) from the first transceiver system (210) to the second transceiver system (220) via the first path (1440) of the third communication link (230) comprises providing channel information (CHANNEL_DATA) from a transceiver system operating in accordance with the Institute of Electrical and Electronic Engineers 802.11b communication protocol or providing channel information (CHANNEL_DATA) from a transceiver system operating in accordance with the Bluetooth communication protocol.

4. A method as defined in claim 1, wherein providing channel information (CHANNEL_DATA) from the first transceiver system (210) to the second transceiver system (220) via the first path (1440) of the third communication link (230) comprises providing a four-bit code indicative of the radio channel associated with the first transceiver system (210) from the first transceiver system (210) to the second transceiver system (220) via the first path (1440) of the third communication link (230).

5. A method as defined in claim 1, wherein providing channel information (CHANNEL_DATA) from the first transceiver system (210) to the second transceiver system (220) via the first path (1440) of the third communication link (230) comprises providing channel information (CHANNEL_DATA) indicative of a direct sequence spread spectrum channel from the first transceiver system (210) to the second transceiver system (220) via the first path (1440) of the third communication link (230), the DSSS channel being a radio channel (310; 320; 330) currently in use by the first transceiver system (210).

6. A method as defined in claim 1, wherein the providing channel information (CHANNEL_DATA) from the first transceiver system (210) to the second transceiver system (220) via the first path (1440) of the third communication link (230) comprises providing a host controller interface command indicative of a frequency hopping spread spectrum channel from the first transceiver system (210) to the second transceiver system (220) via the first path (1440) of the third communication link (230), the FHSS channel being a radio channel (310; 320; 330) operable by the second transceiver system (220) for communication.

7. A method as defined in claim 1, wherein providing channel information (CHANNEL_DATA) from the first transceiver system (210) to the second transceiver system (220) via the first path (1440) of the third communication link (230) comprises providing channel information (CHANNEL_DATA) from transceiver systems disposed within one of a laptop computer (130), a handheld computer, a cellular telephone (136), and a personal digital assistant.

8. A method as defined in claim 1, wherein providing priority information (BT_PRIORITY) from the second transceiver system (220) to the first transceiver system (210) via the second path (1470) of the third communication link (230) comprises providing priority information (BT_PRIORITY) indicative of one of a device discovery, a connection establishment, a connection maintenance, and a human interface device profile via the second path (1470) of the communication link (230).

9. A method of any of the preceding claims, further comprising:
providing a channel clock signal (CHANNEL_CLK) from the second transceiver system (220) to the first transceiver system (210) via a thirdsecond path (1460) of the third communication link (230) to retrieve the information indicative of the radio channel (310; 320; 330); and
providing a second priority signal (802.11b_PRIORITY) from the first transceiver system (210) to the second transceiver system (220) via a fourth path (1450) of the third communication link (230) to use the radio channel (310; 320; 330) in response to a priority activity associated with the first transceiver system (210).

10. A method as defined in claim 9, wherein providing the third communication link (230) having at least four paths (1440-1470) between the first transceiver system (210) and the second transceiver system (220) comprises providing at least one of a wire interface or a wireless link between the first transceiver system (210) and the second transceiver system (220).

11. A method as defined in claim 9, wherein each of the first transceiver system (210) and the second transceiver system (220) comprises a transceiver system operating in accordance with the Institute of Electrical and Electronic Engineers 802.11b communication protocol or a transceiver system operating in accordance with the Bluetooth communication protocol.

12. An electronic device comprising:
a first transceiver system (210) configured to transmit data using a first communication link with a first protocol;
a second transceiver system (220) configured to transmit data using a second communication link with a second protocol;
wherein the first transceiver system (210) and the second transceiver system (220) are capable of transmitting over the same frequency band;
**characterized in** by further comprising:
a third communication link (230) separate from the first and second communication link, and having at least two paths (1440; 1470), the second transceiver (220) in communication with the first transceiver system (210) via the third communication link;
the first transceiver system (210) being configured to provide channel information (CHANNEL_DATA) indicative of a radio channel (310; 320; 330) of the first communication link via a first path (1440) of the third communication link;
the second transceiver system (220) being configured to provide priority information (BT_PRIORITY) indicative of a priority activity associated with the second transceiver system (220) via a second path (1470) of the third communication link (230); and
the channel information (CHANNEL_DATA) and the priority information (BT_PRIORITY) being used to determine channel availability and priority for allowing one of either the first transceiver system (210) or the second transceiver system (220) to communicate without interference from the other.

13. An electronic device as defined in claim 12, wherein the communication link (230) comprises at least one of a wire interface or a wireless link.

14. An electronic device as defined in claim 12, wherein the first transceiver system (210) is a transceiver system operating in accordance with Institute of Electrical and Electronic Engineers 802.11b communication protocol, and the second transceiver system (220) is a transceiver system operating in accordance with Bluetooth communication protocol.

15. An electronic device as defined in claim 12, wherein the channel information (CHANNEL_DATA) includes a four-bit code indicative of the radio channel associated with the first transceiver (210).

16. An electronic device as defined in claim 12, wherein the channel information (CHANNEL_DATA) includes a host controller interface command indicative of a radio channel operable by the second transceiver system (220) for communication.

17. An electronic device as defined in claim 12, wherein the communication link (230) (230) comprises a third path (1460) and a fourth path (1450), wherein the first transceiver system (210) is configured to transmit priority information (802.11b_PRIORITY) indicative of priority activity associated with the first transceiver system (210) via the third path (1460) of the communication link (230), and wherein the second transceiver system (220) is configured to transmit a clock pulse (CHANNEL_CLK) via the fourth path (1450) to initiate transmission of channel information (CHANNEL_DATA) from the first transceiver system (210).

18. An electronic device as defined in claim 12 is one of a laptop computer (130), a handheld computer, a cellular telephone (136), and a personal digital assistant.

## Patentansprüche

1. Verfahren, das folgendes umfasst:
Bereitstellen eines ersten Geräts (110), das ein erstes Sendeempfangssystem, das Daten unter Verwendung einer ersten Kommunikationsverbindung mit einem ersten Protokoll überträgt, und ein zweites Sendeempfangssystem (220) enthält, das Daten unter Verwendung einer zweiten Kommunikationsverbindung mit einem zweiten Protokoll überträgt, wobei das erste Sendeempfangssystem (210) und das zweite Sendeempfangssystem (220) über dasselbe Frequenzband übertragen können;
**dadurch gekennzeichnet, dass** es ferner folgendes umfasst:
Bereitstellen einer Kanalinformation (KANAL_DATEN) vom ersten Sendeempfangssystem (210) zum zweiten Sendeempfangssystem (220) über einen ersten Pfad (1440) einer von der ersten und der zweiten Kommunikationsverbindung getrennten dritten Kommunikationsverbindung (230), wobei die Kanalinformation (KANAL_DATEN) einen Funkkanal (310; 320; 330) der ersten Kommunikationsverbindung anzeigt; und
Bereitstellen einer Prioritätsinformation (BT_PRIORITÄT) vom zweiten Sendeempfangssystem (220) zum ersten Sendeempfangssystem (210) über einen zweiten Pfad (1270) der dritten Kommunikationsverbindung (230), wobei die Prioritätsinformation (BT_PRIORITÄT) eine mit dem zweiten Sendeempfangssystem (220) in Zusammenhang stehende Prioritätsaktivität anzeigt, und die Kanalinformation (KANAL_DATEN) und die Prioritätsinformation (BT_PRIORITÄT) verwendet werden, um die Kanalverfügbarkeit und Priorität zu bestimmen, um entweder dem ersten Sendeempfangssystem (210) oder dem zweiten Sendeempfangssystem (220) die Kommunikation zu erlauben, ohne Störung durch das andere System.

2. Verfahren nach Anspruch 1, bei dem das Bereitstellen der Kanalinformation (KANAL_DATEN) vom ersten Sendeempfangssystem (210) zum zweiten Sendeempfangssystem (220) über den Pfad (1440) der dritten Kommunikationsverbindung (230) das Bereitstellen einer Kanalinformation (KANAL_DATEN) vom ersten Sendeempfangssystem (210) zum zweiten Sendeempfangssystem (220) über einen ersten Pfad (1440) einer drahtgebundenen Schnittstelle und/oder einer drahtlosen Verbindung zwischen dem ersten Sendeempfangssystem (210) und dem zweiten Sendeempfangssystem (220) umfasst.

3. Verfahren nach Anspruch 1, bei dem das Bereitstellen der Kanalinformation (KANAL_DATEN) vom ersten Sendeempfangssystem (210) zum zweiten Sendeempfangssystem (220) über den ersten Pfad (1440) der dritten Kommunikationsverbindung (230) das Bereitstellen einer Kanalinformation (KANAL_DATEN) von einem Sendeempfangssystem, das gemäß dem Institute of Electrical und Electronic Engineers 802.11b Kommunikationsprotokoll arbeitet, oder das Bereitstellen einer Kanalinformation (KANAL_DATEN) von einem Sendeempfangssystem, das gemäß dem Bluetooth-Kommunikationsprotokoll arbeitet, umfasst.

4. Verfahren nach Anspruch 1, bei dem das Bereitstellen der Kanalinformation (KANAL_DATEN) vom ersten Sendeempfangssystem (210) zum zweiten Sendeempfangssystem (220) über den ersten Pfad (1440) der dritten Kommunikationsverbindung (230) das Bereitstellen eines 4-Bit-Codes, das den mit dem ersten Sendeempfangssystem (210) in Zusammenhang stehenden Funkkanal anzeigt, vom ersten Sendeempfangssystem (210) zum zweiten Sendeempfangssystem (220) über den ersten Pfad (1440) der dritten Kommunikationsverbindung (230) umfasst.

5. Verfahren nach Anspruch 1, bei dem das Bereitstellen der Kanalinformation (KANAL_DATEN) vom ersten Sendeempfangssystem (210) zum zweiten Sendeempfangssystem (220) über den ersten Pfad (1440) der dritten Kommunikationsverbindung (230) das Bereitstellen einer Kanalinformation (KANAL_DATEN), die einen Direct Sequence Spectrum Kanal anzeigt, vom ersten Sendeempfangssystem (210) zum zweiten Sendeempfangssystem (220) über den ersten Pfad (1440) der dritten Kommunikationsverbindung (230) umfasst, wobei der Direct Sequence Spectrum Kanal ein Funkkanal (310; 320; 330) ist, der gerade vom ersten Sendeempfangssystem (210) verwendet wird.

6. Verfahren nach Anspruch 1, bei dem das Bereitstellen der Kanalinformation (KANAL_DATEN) vom ersten Sendeempfangssystem (210) zum zweiten Sendeempfangssystem (220) über den ersten Pfad (1440) der dritten Kommunikationsverbindung (230) das Bereitstellen eines Host Controller Interface Befehls, der einen Frequency Hopping Spread Spectrum Kanal anzeigt, vom ersten Sendeempfangssystem (210) zum zweiten Sendeempfangssystem (220) über den ersten Pfad (1440) der dritten Kommunikationsverbindung (230) umfasst, wobei der Frequency Hopping Spread Spectrum Kanal ein Funkkanal (310; 320; 330) ist, der vom zweiten Sendeempfangssystem (220) für die Kommunikation in Betrieb nehmbar ist.

7. Verfahren nach Anspruch 1, bei dem das Bereitstellen der Kanalinformation (KANAL_DATEN) vom ersten Sendeempfangssystem (210) zum zweiten Sendeempfangssystem (220) über den ersten Pfad (1440) der dritten Kommunikationsverbindung (230) das Bereitstellen einer Kanalinformation (KANAL_DATEN) von Sendeempfangssystemen umfasst, die innerhalb eines tragbaren Rechners (130), eines Minicomputers, eines Mobiltelefons (136) und eines Organizers angewendet werden.

8. Verfahren nach Anspruch 1, bei dem das Bereitstellen der Prioritätsinformation (BT_PRIORITÄT) vom zweiten Sendeempfangssystem (220) zum ersten Sendeempfangssystem (210) über den zweiten Pfad (1470) der dritten Kommunikationsverbindung (230) das Bereitstellen einer Prioritätsinformation (BT_PRIORITÄT), das eine Geräteerkennung, eine Verbindungsherstellung, eine Verbindungsaufrechterhaltung, oder ein Human Interface Device Profil anzeigt, über den zweiten Pfad (1470) der Kommunikationsverbindung (230) umfasst.

9. Verfahren nach einem der vorhergehenden Ansprüche, das ferner folgendes umfasst:
Bereitstellen eines Kanaltaktsignals (KANAL_CLK) vom zweiten Sendeempfangssystem (220) zum ersten Sendeempfangssystem (210) über einen dritten Pfad (1460) der dritten Kommunikationsverbindung (230), um die Information, die den Funkkanal (310; 320; 330) anzeigt, wiederzuerlangen; und
Bereitstellen eines zweiten Prioritätssignals (802.11b_PRIORITÄT) vom ersten Sendeempfangssystem (210) zum zweiten Sendeempfangssystem (220) über einen vierten Pfad (1450) der dritten Kommunikationsverbindung (230) zur Benutzung des Funkkanals (310; 320; 330) in Antwort auf eine mit dem ersten Sendeempfangssystem (210) in Zusammenhang stehende Prioritätsaktivität.

10. Verfahren nach Anspruch 9, bei dem das Bereitstellen der dritten Kommunikationsverbindung (230), die wenigstens vier Pfade (1440-1470) zwischen dem ersten Sendeempfangssystem (210) und dem zweiten Sendeempfangssystem (220) aufweist, das Bereitstellen einer drahtgebundenen Schnittstelle und/oder einer drahtlosen Verbindung zwischen dem ersten Sendeempfangssystem (210) und dem zweiten Sendeempfangssystem (220) umfasst.

11. Verfahren nach Anspruch 9, bei dem sowohl das erste Sendeempfangssystem (210) als auch das zweite Sendeempfangssystem (220) ein Sendeempfangssystem, das gemäß dem Institute of Electrical and Electronical Engineers (802.11b Kommuniktationsprotokoll arbeitet, oder ein Sendeempfangssystem umfassen, das gemäß dem Bluetooth-Kommunikationsprotokoll arbeitet, umfasst.

12. Elektronisches Gerät, mit:
einem ersten Sendeempfangssystem (210), das eingerichtet ist, Daten unter Verwendung einer ersten Kommunikationsverbindung mit einem ersten Protokoll zu übertragen;
einem zweiten Sendeempfangssystem (220), das eingerichtet ist, Daten unter Verwendung einer zweiten Kommunikationsverbindung mit einem zweiten Protokoll zu übertragen;
wobei das erste Sendeempfangssystem (210) und das zweite Sendeempfangssystem (220) über dasselbe Frequenzband übertragen können;
**dadurch gekennzeichnet, dass** es ferner folgendes umfasst:
eine von der ersten und zweiten Kommunikationsverbindung getrennten dritten Kommunikationsverbindung (230) mit wenigstens zwei Pfaden (1440, 1470), wobei das zweite Empfangssystem (220) in Kommunikation mit dem ersten Sendeempfangssystem (210) über die dritte Kommunikationsverbindung steht;
das erste Sendeempfangssystem (220) eingerichtet ist, Kanalinformation (KANAL_DATEN), die einen Funkkanal (310; 320; 330) der ersten Kommunikationsverbindung anzeigt, über einen ersten Pfad (1440) der dritten Kommunikationsverbindung bereitzustellen;
das zweite Sendeempfangssystem (220) eingerichtet ist, Prioritätsinformation (BT_PRIORITÄT), die eine mit dem zweiten Sendeempfangssystem (220) in Zusammenhang stehende Prioritätsaktivität anzeigt, über einen zweiten Pfad (1470) der dritten Kommunikationsverbindung (230) bereitzustellen; und
die Kanalinformation (KANAL_DATEN) und die Prioritätsinformation (BT_PRIORITÄT) verwendet werden, um die Kanalverfügbarkeit und Priorität zu bestimmen, um entweder dem ersten Sendeempfangssystem (210) oder dem zweiten Sendeempfangssystem (220) die Kommunikation zu erlauben, ohne Störung durch das andere System.

13. Elektronisches Gerät nach Anspruch 12, bei dem die Kommunikationsverbindung (330) eine drahtgebundene Schnittstelle und/oder eine drahtlose Verbindung umfasst.

14. Elektronisches Gerät nach Anspruch 12, bei dem das erste Sendeempfangssystem (210) ein Sendeempfangssystem ist, das gemäß dem Institute of Electric and Electronic Engineers 802.11b Kommunikationsprotokoll arbeitet, und das zweite Sendeempfangssystem (220) ein Sendeempfangssystem ist, das gemäß dem Bluetooth-Kommunikationsprotokoll arbeitet.

15. Elektronisches Gerät nach Anspruch 12, bei dem die Kanalinformation (KANAL_DATEN) einen 4-Bit-Code umfasst, der den mit dem ersten Sendeempfangssystem (210) in Zusammenhang stehenden Funkkanal anzeigt.

16. Elektronisches Gerät nach Anspruch 12, bei dem die Kanalinformation (KANAL_DATEN) einen Host Controller Interface Befehl umfasst, der einen vom zweite Sendeempfangssystem (220) zur Kommunikation in Betrieb nehmbaren Funkkanal anzeigt.

17. Elektronisches Gerät nach Anspruch 12, bei dem die Kommunikationsverbindung (230) einen dritten Pfad (1440) und einen vierten Pfad (1450) umfasst, wobei das erste Sendeempfangssystem (210) eingerichtet ist, Prioritätsinformation (802.11b_PRIORITÄT), die eine mit dem ersten Sendeempfangssystem (210) in Zusammenhang stehende Prioritätsaktivität anzeigt, über den dritten Pfad (1460) der Kommunikationsverbindung (230) zu übertragen, und wobei das zweite Sendeempfangssystem (220) eingerichtet ist, einen Taktpuls (KANAL_CLK) über den vierten Pfad (1450) zum Auslösen der Übertragung der Kanalinformation (KANAL_DATEN) vom ersten Sendeempfangssystem (210) zu übertragen.

18. Elektronisches Gerät nach Anspruch 12, das ein tragbarer Rechner (130), ein Minicomputer, ein Mobiltelefon (136) oder ein Organizer ist.

## Revendications

1. Procédé comprenant l'étape consistant à :
fournir un premier dispositif (110) comprenant un premier système émetteur-récepteur qui transmet des données en utilisant une première liaison de communication avec un premier protocole et un deuxième système émetteur-récepteur (220) qui transmet des données en utilisant une deuxième liaison de communication avec un deuxième protocole, dans lequel le premier système émetteur-récepteur (210) et le deuxième système émetteur-récepteur (220) sont capables de transmettre sur la même bande de fréquences ;
**caractérisé en ce qu'**il comprend en outre les étapes consistant à :
fournir des informations de canal (CHANNEL_DATA) du premier système émetteur-récepteur (210) au deuxième système émetteur-récepteur (220) par l'intermédiaire d'un premier chemin (1440) d'une troisième liaison de communication (230) distincte de la première liaison de communication et de la deuxième liaison de communication, les informations de canal (CHANNEL_DATA) étant indicatives d'un canal radio (310 ; 320 ; 330) de la première liaison de communication ; et
fournir des informations de priorité (BT_PRIORITY) du deuxième système émetteur-récepteur (220) au premier système émetteur-récepteur (210) par l'intermédiaire d'un deuxième chemin (1470) de la troisième liaison de communication (230), les informations de priorité (BT_PRIORITY) étant indicatives d'une activité prioritaire associée au deuxième système émetteur-récepteur (220), dans lequel les informations de canal (CHANNEL_DATA) et les informations de priorité (BT_PRIORITY) sont utilisés pour déterminer la disponibilité de canal et la priorité pour permettre à l'un du premier système émetteur-récepteur (210) et du deuxième système émetteur-récepteur (220) de communiquer sans interférence entre eux.

2. Procédé selon la revendication 1, dans lequel l'étape consistant à fournir des informations de canal (CHANNEL_DATA) du premier système émetteur-récepteur (210) au deuxième système émetteur-récepteur (220) par l'intermédiaire du premier chemin (1440) de la troisième liaison de communication (230) comprend l'étape consistant à fournir des informations de canal (CHANNEL_DATA) du premier système émetteur-récepteur (210) au deuxième système émetteur-récepteur (220) par l'intermédiaire d'un premier chemin (1440) d'au moins l'une d'une interface câblée et d'une liaison sans fil entre le premier système émetteur-récepteur (210) et le deuxième système émetteur-récepteur (220).

3. Procédé selon la revendication 1, dans lequel l'étape consistant à fournir des informations de canal (CHANNEL_DATA) du premier système émetteur-récepteur (210) au deuxième système émetteur-récepteur (220) par l'intermédiaire du premier chemin (1440) de la troisième liaison de communication (230) comprend l'étape consistant à fournir des informations de canal (CHANNEL_DATA) d'un système émetteur-récepteur fonctionnant selon le protocole de communication Institute of Electrical and Electronic Engineers 802.11b ou l'étape consistant à fournir des informations de canal (CHANNEL_DATA) d'un système émetteur-récepteur fonctionnant selon le protocole de communication Bluetooth.

4. Procédé selon la revendication 1, dans lequel l'étape consistant à fournir des informations de canal (CHANNEL_DATA) du premier système émetteur-récepteur (210) au deuxième système émetteur-récepteur (220) par l'intermédiaire du premier chemin (1440) de la troisième liaison de communication (230) comprend l'étape consistant à fournir un code à quatre bits indicatif du canal radio associé au premier système émetteur-récepteur (210) du premier système émetteur-récepteur (210) au deuxième système émetteur-récepteur (220) par l'intermédiaire du premier chemin (1440) de la troisième liaison de communication (230).

5. Procédé selon la revendication 1, dans lequel l'étape consistant à fournir des informations de canal (CHANNEL DATA) du premier système émetteur-récepteur (210) au deuxième système émetteur-récepteur (220) par l'intermédiaire du premier chemin (1440) de la troisième liaison de communication (230) comprend l'étape consistant à fournir des informations de canal (CHANNEL_DATA) indicatives d'un canal de spectre d'étalement de séquence directe, DSSS, du premier système émetteur-récepteur (210) au deuxième système émetteur-récepteur (220) par l'intermédiaire du premier chemin (1440) de la troisième liaison de communication (230), le canal DSSS étant un canal radio (310 ; 320 ; 330) actuellement utilisé par le premier système émetteur-récepteur (210).

6. Procédé selon la revendication 1, dans lequel l'étape consistant à fournir des informations de canal (CHANNEL_DATA) du premier système émetteur-récepteur (210) au deuxième système émetteur-récepteur (220) par l'intermédiaire du premier chemin (1440) de la troisième liaison de communication (230) comprend l'étape consistant à fournir une commande d'interface de contrôleur hôte indicative d'un canal de spectre d'étalement de saut de fréquence, FHSS, du premier système émetteur-récepteur (210) au deuxième système émetteur-récepteur (220) par l'intermédiaire du premier chemin (1440) de la troisième liaison de communication (230), le canal FHSS étant un canal radio (310 ; 320 ; 330) utilisable par le deuxième système émetteur-récepteur (220) pour une communication.

7. Procédé selon la revendication 1, dans lequel l'étape consistant à fournir des informations de canal (CHANNEL_DATA) du premier système émetteur-récepteur (210) au deuxième système émetteur-récepteur (220) par l'intermédiaire du premier chemin (1440) de la troisième liaison de communication (230) comprend l'étape consistant à fournir des informations de canal (CHANNEL_DATA) de systèmes émetteur-récepteur disposés à l'intérieur de l'un d'un ordinateur portable (130), d'un ordinateur portatif, d'un téléphone cellulaire (136) et d'un assistant numérique personnel.

8. Procédé selon la revendication 1, dans lequel l'étape consistant à fournir des informations de priorité (BT_PRIORITY) du deuxième système émetteur-récepteur (220) au premier système émetteur-récepteur (210) par l'intermédiaire du deuxième chemin (1470) de la troisième liaison de communication (230) comprend l'étape consistant à fournir des informations de priorité (BT_PRIORITY) indicatives de l'un d'une découverte de dispositif, d'un établissement de connexion, d'un maintien de connexion et d'un profil de dispositif d'interface humaine par l'intermédiaire du deuxième chemin (1470) de la liaison de communication (230).

9. Procédé selon l'une quelconque des revendications précédentes, comprenant en outre les étapes consistant à :
fournir un signal d'horloge de canal (CHANNEL_CLK) du deuxième système émetteur-récepteur (220) au premier système émetteur-récepteur (210) par l'intermédiaire d'un troisième chemin (1460) de la troisième liaison de communication (230) pour extraire les informations indicatives du canal radio (310 ; 320 ; 330) ; et
fournir un deuxième signal de priorité (802.11b_PRIORITY) du premier système émetteur-récepteur (210) au deuxième système émetteur-récepteur (220) par l'intermédiaire d'un quatrième chemin (1450) de la troisième liaison de communication (230) pour utiliser le canal radio (310 ; 320 ; 330) en réponse à une activité prioritaire associée au premier système émetteur-récepteur (210).

10. Procédé selon la revendication 9, dans lequel l'étape consistant à fournir la troisième liaison de communication (230) ayant au moins quatre chemins (1440-1470) entre le premier système émetteur-récepteur (210) et le deuxième système émetteur-récepteur (220) comprend l'étape consistant à fournir au moins l'une d'une interface câblée et d'une liaison sans fil entre le premier système émetteur-récepteur (210) et le deuxième système émetteur-récepteur (220).

11. Procédé selon la revendication 9, dans lequel chacun du premier système émetteur-récepteur (210) et du deuxième système émetteur-récepteur (220) comprend un système émetteur-récepteur fonctionnant selon le protocole de communication Institute of Electrical and Electronic Engineers 802.11b ou un système émetteur-récepteur fonctionnant selon le protocole de communication Bluetooth.

12. Dispositif électronique comprenant :
un premier système émetteur-récepteur (210) configuré pour transmettre des données en utilisant une première liaison de communication avec un premier protocole ;
un deuxième système émetteur-récepteur (220) configuré pour transmettre des données en utilisant une deuxième liaison de communication avec un deuxième protocole ;
dans lequel le premier système émetteur-récepteur (210) et le deuxième système émetteur-récepteur (220) sont capables de transmettre sur la même bande de fréquences ;
**caractérisé en ce qu'**il comprend en outre :
une troisième liaison de communication (230) distincte de la première liaison de communication et de la deuxième liaison de communication, et ayant au moins deux chemins (1440 ; 1470), le deuxième système émetteur-récepteur (220) étant en communication avec le premier système émetteur-récepteur (210) par l'intermédiaire de la troisième liaison de communication ;
le premier système émetteur-récepteur (210) étant configuré pour fournir des informations de canal (CHANNEL_DATA) indicatives d'un canal radio (70 ; 320 ; 330) de la première liaison de communication par l'intermédiaire d'un premier chemin (1440) de la troisième liaison de communication ;
le deuxième système émetteur-récepteur (220) étant configuré pour fournir des informations de priorité (BT_PRIORITY) indicatives d'une activité prioritaire associée au deuxième système émetteur-récepteur (220) par l'intermédiaire d'un deuxième chemin (1470) de la troisième liaison de communication (230) ; et
les informations de canal (CHANNEL_DATA) et les informations de priorité (BT_PRIORITY) étant utilisées pour déterminer la disponibilité de canal et la priorité pour permettre à l'un du premier système émetteur-récepteur (210) et du deuxième système émetteur-récepteur (220) de communiquer sans interférence entre eux.

13. Dispositif électronique selon la revendication 12, dans lequel la liaison de communication (230) comprend au moins l'une d'une interface câblée et d'une liaison sans fil.

14. Dispositif électronique selon la revendication 12, dans lequel le premier système émetteur-récepteur (210) est un système émetteur-récepteur fonctionnant selon le protocole de communication Institute of Electrical and Electronic Engineers 802.11b et le deuxième système émetteur-récepteur (220) est un système émetteur-récepteur fonctionnant selon le protocole de communication Bluetooth.

15. Dispositif électronique selon la revendication 12, dans lequel les informations de canal (CHANNEL DATA) comprennent un code à quatre bits indicatif du canal radio associé au premier système émetteur-récepteur (210).

16. Dispositif électronique selon la revendication 12, dans lequel les informations de canal (CHANNEL_DATA) comprennent une commande d'interface de contrôleur hôte indicative d'un canal radio utilisable par le deuxième système émetteur-récepteur (220) pour une communication.

17. Dispositif électronique selon la revendication 12, dans lequel la liaison de communication (230) comprend un troisième chemin (1460) et un quatrième chemin (1450), dans lequel le premier système émetteur-récepteur (210) est configuré pour transmettre des informations de priorité (802.11b_PRIORITY) indicatives d'une activité prioritaire associée au premier système émetteur-récepteur (210) par l'intermédiaire du troisième chemin (1460) de la liaison de communication (230), et dans lequel le deuxième système émetteur-récepteur (220) est configuré pour transmettre une impulsion d'horloge (CHANNEL CLK) par l'intermédiaire du quatrième chemin (1450) pour lancer la transmission d'informations de canal (CHANNEL DATA) du premier système émetteur-récepteur (210).

18. Dispositif électronique selon la revendication 12, qui est l'un d'un ordinateur portable (130), d'un ordinateur portatif, d'un téléphone cellulaire (136) et d'un assistant numérique personnel.
